(19) Europäisches Patentamt
European Patent Office
Office européen des brevets

(11) **EP 4 127 655 B1**

(12) **EUROPÄISCHE PATENTSCHRIFT**

(45) Veröffentlichungstag und Bekanntmachung des Hinweises auf die Patenterteilung:
**01.01.2025 Patentblatt 2025/01**

(21) Anmeldenummer: **21717766.6**

(22) Anmeldetag: **22.03.2021**

(51) Internationale Patentklassifikation (IPC):
**G01N 15/02** *(2024.01)* **G01N 15/0205** *(2024.01)*
**G01N 15/14** *(2024.01)* **G01N 15/10** *(2024.01)*

(52) Gemeinsame Patentklassifikation (CPC):
**G01N 15/0211; G01N 15/0205; G01N 15/1459;**
G01N 2015/1027

(86) Internationale Anmeldenummer:
**PCT/EP2021/057184**

(87) Internationale Veröffentlichungsnummer:
**WO 2021/191104 (30.09.2021 Gazette 2021/39)**

(54) **VERFAHREN UND AEROSOL-MESSGERÄT ZUM BESTIMMEN DER PARTIKELGESCHWINDIGKEIT EINES AEROSOLS**

METHOD AND AEROSOL MEASURING DEVICE FOR DETERMINING THE PARTICLE SPEED OF AN AEROSOL

PROCÉDÉ ET DISPOSITIF DE MESURE POUR DÉTERMINER LA VITESSE DE PARTICULES D'UN AÉROSOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2020 DE 102020001876**

(43) Veröffentlichungstag der Anmeldung:
**08.02.2023 Patentblatt 2023/06**

(73) Patentinhaber: **Palas GmbH Partikel-und Lasermesstechnik**
**76229 Karlsruhe (DE)**

(72) Erfinder:
• **WEISS, Maximilian**
**76356 Weingarten (DE)**
• **WEIS, Frederik**
**76863 Herxheim (DE)**
• **KOHLER, Sebastian**
**68794 Oberhausen-Rheinhausen (DE)**

(74) Vertreter: **Lichti - Patentanwälte Partnerschaft mbB**
**Postfach 41 07 60**
**76207 Karlsruhe (DE)**

(56) Entgegenhaltungen:
**EP-A1- 1 544 600 EP-A1- 3 056 892**
**EP-A2- 3 081 920**

• **SUSANNE V. HERING ET AL: "A Laminar-Flow, Water-Based Condensation Particle Counter (WCPC)", AEROSOL SCIENCE AND TECHNOLOGY, vol. 39, no. 7, 1 July 2005 (2005-07-01), pages 659 - 672, XP055015215, ISSN: 0278-6826, DOI: 10.1080/02786820500182123**

**Beschreibung**

Die Erfindung betritt ein Verfahren und ein Aerosol-Messgerät zum Bestimmen der Partikelgeschwindigkeit eines Aerosols.

Aus dem Stand der Technik sind Verfahren bekannt, bei denen Aerosol-Partikel des durch eine Messzelle strömenden Aerosols in der Messzelle mit einem elektromagnetischen Strahl beleuchtet, Streulicht von einem Sensor aufgenommen und Streulichtsignale der Aerosol-Partikel erfasst werden, siehe z.B. EP 3 081 920 A2. Die Partikelgeschwindigkeit ist ein für die Charakterisierung des Aerosols wesentlicher Parameter. Die Bestimmung der Partikelgeschwindigkeit des Aerosols erfordert jedoch zusätzliche, dezidierte Messgeräte. Dadurch sind die bekannten Verfahren zum Bestimmen der Partikelgeschwindigkeit konstruktiv aufwändig und teuer. Entsprechendes gilt für die bekannten Aerosol-Messgeräte.

Es ist daher die Aufgabe der Erfindung, die Nachteile aus dem Stand der Technik zu beseitigen und ein Verfahren zu entwickeln, mit dessen Hilfe die Partikelgeschwindigkeit des Aerosols einfacher bestimmbar ist. Entsprechendes gilt vorrichtungsmäßig für die bekannten Aerosol-Messgeräte.

Die Aufgabe wird gelöst durch ein Verfahren mit den Merkmalen des Anspruchs 1. Vorrichtungsmäßig wird die Aufgabe gelöst durch ein Aerosol-Messgerät gemäß Anspruch 11

Erfindungsgemäß ist ein Computerprogramm gemäß Anspruch 15.

Die Erfindung basiert auf dem Grundgedanken, dass die Signaldauern der gemessenen Streusignale den Verweilzeiten der Aerosol-Partikel in der Messzelle entsprechen. Aus dieser Überlegung lässt sich durch eine Bestimmung der Signaldauern die Partikelgeschwindigkeit des Aerosols bestimmen. Dabei entfällt die Notwendigkeit, zur Bestimmung der Partikelgeschwindigkeit des Aerosols zusätzliche Messgeräte, wie beispielsweise Durchfluss-Messgeräte vorzusehen. Damit ist die Partikelgeschwindigkeit einfacher, insbesondere auch konstruktiv einfacher, bestimmbar.

Vorzugsweise ist vorgesehen, dass die bestimmten Signaldauern der Streulichtsignale korrigiert werden, um eine genauere Bestimmung der Partikelgeschwindigkeit des Aerosols zu ermöglichen.

Zur Korrektur der Signaldauern können mindestens 10, vorzugsweise mindestens 100, besonders vorzugsweise mindestens 500 Messungen der Streulichtsignale erfolgen. Bevorzugt erfolgt mindestens eine der Messungen an jeweils einem einzelnen Aerosol-Partikel, insbesondere erfolgen alle Messungen jeweils an einem einzelnen Aerosol-Partikel, wobei die Aerosol-Partikel einzeln durch die Messzelle strömen können. Dies erhöht die Genauigkeit der Bestimmung der Signaldauern. Die Korrektur erfolgt durch eine statistische Auswertung der Messungen. Dies entspricht insbesondere einer Flugzeitanalyse der Aerosol-Partikel.

Die Korrektur der Signaldauern erfolgt anhand einer Häufigkeitsverteilung der Signaldauern. Dabei wird jeder Signaldauer ihre jeweilige Häufigkeit zugeordnet. Intervalle von Signaldauern können in zu Gruppen zusammengefasst werden, wobei jeder Gruppe vorzugsweise eine Signaldauer zugeordnet wird. Die Gruppen können signaltechnischen Messkanälen zugeordnet sein. Graphisch entspricht die Häufigkeitsverteilung beispielsweise einem Histogramm, bei dem die Signaldauern gegenüber ihrer jeweiligen Häufigkeit aufgetragen sind.

Um die Genauigkeit der Korrektur der Signaldauern zu verbessern, kann die Häufigkeitsverteilung der Signaldauern interpoliert werden, vorzugsweise mittels insbesondere stückweiser polynomialer Interpolation. Beispielsweise wird eine Spline-Interpolation verwendet, insbesondere eine kubische Spline-Interpolation, was eine verbesserte Korrektur der Signaldauern ermöglicht.

In einer weiteren vorteilhaften Ausgestaltung der Erfindung erfolgt zur Korrektur der Signaldauern eine Bestimmung mindestens eines insbesondere lokalen Maximums der Häufigkeitsverteilung. Das Maximum der Häufigkeitsverteilung der Signaldauern entspricht jenen Aerosol-Partikeln, die auf einem direkten Weg die Messzelle durchströmen. Aufgrund von Stoßprozessen beim Durchqueren der Messzelle oder eines schrägen Weges ergibt sich eine Streuung der Messwerte für die Signaldauern. Indem das Maximum der Häufigkeitsverteilung bestimmt wird, lässt sich eine zuverlässigere Aussage über die tatsächliche Partikelgeschwindigkeit des Aerosols treffen. In Abhängigkeit von der Geometrie der Messzelle können mehrere lokale Maxima der Häufigkeitsverteilung ausgebildet sein. Vorzugsweise werden alle lokalen Maxima der Häufigkeitsverteilung bestimmt. Im Sinne der Erfindung entspricht das lokale Maximum dem Maximalwert der Häufigkeitsverteilung innerhalb eines insbesondere benutzerdefinierten Intervalls.

Die Partikelgrößen des Aerosols können beispielsweise durch das Aerosol-Messgerät bestimmt werden und die Korrektur der Signaldauern kann in Abhängigkeit von den Partikelgrößen des Aerosols erfolgen. Durch die partikelgrößenabhängige Korrektur der Signaldauern ist eine genauere Bestimmung der Partikelgeschwindigkeit des Aerosols möglich. Hierzu kann beispielsweise jeder Partikelgröße ein Korrekturwert zugeordnet werden, wobei der Korrekturwert dem partikelgrößenabhängigen Einfluss auf die bestimmte Signaldauer entspricht. Je nach Partikelgröße kann die hierfür bestimmte Signaldauer durch Berechnung mit dem Korrekturwert partikelgrößenabhängig korrigiert werden. Insbesondere ist die Häufigkeitsverteilung der Signaldauern partikelgrößenabhängig korrigierbar. In einer weiteren Ausgestaltung erfolgt die Korrektur der bestimmten Signaldauern in Abhängigkeit von dem Material der Aerosol-Partikel, was die Genauigkeit des Verfahrens weiter verbessert. Dabei kann jedem Material der Aerosol-Partikel ein Korrekturwert zugeordnet werden.

Vorzugsweise wird anhand der Häufigkeitsverteilung ein statistischer Varianzparameter bestimmt, um beispielsweise die Abweichung der Häufigkeitsverteilung zu charakterisieren. Der Varianzparameter ist beispielsweise einem lokalen Maximum der Häufigkeitsverteilung zugeordnet. Hierzu kann beispielsweise die Halbwertsbreite (FWHM) des mindestens einen lokalen Maximums bestimmt werden, die der Abweichung der Häufigkeitsverteilung um das lokale Maximum entspricht.

In einer weiteren Ausgestaltung des erfindungsgemäßen Verfahrens erfolgt die Korrektur der Signaldauern in Abhängigkeit von der Geometrie der Messzelle. Wenn das Aerosol beispielsweise an einer ersten Position in die Messzelle eintritt, die Messzelle durchquert und diese an einer zweiten Position verlässt, kann bei Kenntnis des zurückgelegten Weges innerhalb der Messzelle aus der bestimmten zeitlichen Signaldauer die Partikelgeschwindigkeit des Aerosols bestimmt werden. In einer weiteren Ausgestaltung durchquert das Aerosol die Messzelle auf mindestens zwei unterschiedlichen Wegen. In diesem Fall weist die Häufigkeitsverteilung mindestens zwei lokale Maxima auf. Die Anzahl der bestimmten Signaldauern entspricht der Anzahl möglicher Wege, auf denen das Aerosol die Messzelle durchströmen kann. Da die Partikelgeschwindigkeit des Aerosols unabhängig vom zurückgelegten Weg durch die Messzelle gleich sein muss, erlaubt die Kenntnis der Wegstrecken durch die Messzelle eine Korrektur der bestimmten Signaldauern zur Berechnung der Partikelgeschwindigkeit des Aerosols.

Vorzugsweise umfasst die Korrektur der Signaldauern eine Konstante, die insbesondere unabhängig von der Partikelgröße des Aerosols ist. Die Konstante entspricht beispielsweise einem Offset-Wert, der dem Aerosol-Messgerät zugeordnet ist und insbesondere auch unabhängig von der Partikelgeschwindigkeit des Aerosols und/oder der Geometrie der Messzelle ist. Die Konstante ist ein zeitlicher Wert und liegt beispielsweise innerhalb eines Intervalls zwischen 2 μs und 10 us, vorzugsweise zwischen 4 μs und 6 us.

In vorteilhafter Ausgestaltung der Erfindung werden zur Bestimmung der Konstante mindestens zwei Signaldauern verwendet, die jeweils einem lokalen Maximum der Häufigkeitsverteilung zugeordnet sind. Insbesondere wird dabei ein Quotient zweier vorzugsweise korrigierter Signaldauern verwendet. Besonders vorzugsweise wird zur Bestimmung der Konstante die Abhängigkeit zwischen der bestimmten Signaldauer und der Partikelgeschwindigkeit ermittelt, insbesondere mittels einer Messung mittels eines Durchfluss-Messgerätes.

Zur Korrektur der Signaldauern können weitere Schritte vorgenommen werden, beispielsweise die Anwendung von signaltechnischen Filter, wie Hoch- und/oder Tiefpassfilter oder auch Filter zur Rauschunterdrückung.

Aus der bestimmten Partikelgeschwindigkeit wird vorzugsweise die Volumenstromgeschwindigkeit des Aerosols bestimmt, beispielsweise in Abhängigkeit von dessen Fließverhalten innerhalb der Messzelle. In einer weiteren vorteilhaften Ausgestaltung der Erfindung strömt das Aerosol als laminare Strömung durch die Messzelle. Vorzugsweise strömt das Aerosol als gleichmäßige Strömung durch die Messzelle, wobei im Sinne der Erfindung keine nennenswerte Beschleunigung des Aerosols erfolgt. In diesem Falle entspricht die Volumenstromgeschwindigkeit des Aerosols dessen Partikelgeschwindigkeit.

Vorrichtungsmäßig weist das Aerosol-Messgerät insbesondere eine Anzeigeeinrichtung auf, mittels der die Partikelgeschwindigkeit des Aerosols und/oder ein der Partikelgeschwindigkeit des Aerosols zugeordneter Parameter ausgebbar sind.

Die Verarbeitungseinheit ist vorzugsweise derart ausgestaltet, die Schritte mindestens eines der vorstehend genannten Verfahren durchzuführen. Der elektromagnetische Strahl kann als vorzugsweise polychromatischer Lichtstrahl und/oder als Laserstrahl ausgebildet sein.

Die Verarbeitungseinheit des Aerosol-Messgeräts kann mit einer Strömungseinrichtung verbunden sein, wobei die Strömungseinrichtung insbesondere zur Regelung der Fließgeschwindigkeit und/oder der Partikelgeschwindigkeit des Aerosols auf einen benutzerdefinierten Wert ausgestaltet ist. Hierzu wird vorzugsweise der Wert der bestimmten Partikelgeschwindigkeit des Aerosols an die Strömungseinrichtung übertragen. Beispielsweise weist die Strömungseinrichtung mindestens eine Pumpe und/oder einen Lüfter auf. Die Strömungseinrichtung ist zur Erzeugung eines insbesondere veränderlichen Luftstroms ausgebildet.

Die Erfindung kann vorsehen, dass ein Schnitt der Messzelle eine mehreckige, insbesondere viereckige Grundform aufweist. Die Messzelle kann mindestens einen, vorzugsweise mindestens zwei definierte Wege für die Bewegung des Aerosols durch die Messzelle aufweisen, um die Bestimmung und/oder die Korrektur der Signaldauern zu vereinfachen. In einer vorteilhaften Ausgestaltung der Erfindung ist die Messzelle quaderförmig ausgebildet. Vorzugsweise kann ein Schnitt der Messzelle eine T-förmige Grundform aufweisen. Dadurch ergeben sich beispielsweise drei Wege für das Aerosol, wobei ein erster Weg länger als die restlichen beiden ist und die restlichen beiden gleich lang sind.

Das erfindungsgemäße Computerprogramm wird vorzugsweise auf der Steuereinheit des Aerosol-Messgerätes ausgeführt.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnungen im Einzelnen erläutert sind. Dabei zeigen:

Fig. 1     eine schematische Darstellung eines erfindungsgemäßen Aerosol-Messgeräts,

Fig. 2 ein schematischer Aufbau des Aerosol-Messgeräts,

Fig. 3 einen schematischen Schnitt durch eine Messzelle mit rechteckiger Grundform,

Fig. 4 ein Ablaufdiagramm eines erfindungsgemäßen Verfahrens,

Fig. 5 einen schematischen Schnitt durch eine Messzelle mit T-förmiger Grundform,

Fig. 6 eine weitere Ausgestaltung des erfindungsgemäßen Verfahrens in einem Ablaufdiagramm,

Fig. 7 eine Häufigkeitsverteilung von Signaldauern,

Fig. 8 eine partikelgrößenabhängige Verteilung von Signaldauern,

Fig. 9 eine interpolierte Verteilung der Fig. 8,

Fig. 10 eine weitere Häufigkeitsverteilung von Signaldauern in einem Histogramm und

Fig. 11 das Histogramm der Fig. 10 nach partikelgrößenabhängiger Korrektur.

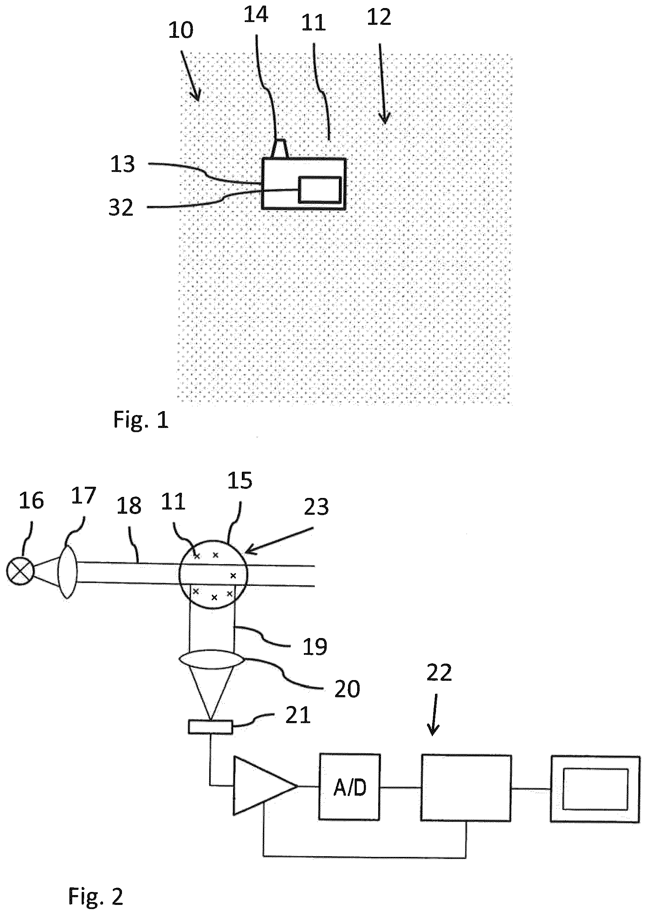

Fig. 1 zeigt in schematischer Darstellung ein Aerosol 10, das feste und flüssige Aerosol-Partikel 11 in einem Gas 12, beispielsweise Luft, enthält. Aerosol-Partikel 11 sind beispielsweise Wassertröpfchen, Rußpartikel, Materialabrieb, Pollen und/oder andere organische und chemische Stoffe.

Im Bereich des Aerosols 10 ist ein Aerosol-Messgerät 13 in Form eines Aerosol-Spektrometers angeordnet, das eine Partikelgrößenverteilung $c_n$ der Aerosol-Partikel 11 des Aerosols 10 in Abhängigkeit von deren Partikeldurchmessern $d_p$ misst. Die Aerosol-Partikel 11 werden hierzu über eine Zugangsöffnung 14 des Aerosol-Messgeräts 13 und über ein Durchflussrohr 15 mittels einer stromab angeordneten Strömungseinrichtung in Form einer Pumpeinrichtung 32 hindurch gesaugt, wobei die Pumpeinrichtung 32 in Fig. 1 skizziert dargestellt ist. Das Durchflussrohr 15 ist im skizzierten Aufbau des Aerosol-Messgeräts 13 gemäß Fig. 2 senkrecht zur Zeichenebene angeordnet.

Die Aerosol-Partikel 11 werden einzeln im Durchflussrohr 15 senkrecht zu ihrer Flugrichtung mit einem kollimierten Lichtstrahl 18 aus polychromatischem Licht einer Lichtquelle 16 und einer Linse 17 bestrahlt. Aufgrund der dadurch stattfindenden Streuprozesse senden die Aerosol-Partikel 11 Streulicht 19 ab, das senkrecht zur Flugrichtung der Aerosol-Partikel 11 und senkrecht zur Bestrahlungsrichtung des Lichts aus der Lichtquelle 16 auf eine Sammellinse 20 trifft. Die Sammellinse 20 fokussiert das Streulicht 19 auf einen optoelektrischen Sensor 21, der die Signale des Streulichtes 19 erfasst und in elektrische Signale umwandelt. Eine elektronische Verarbeitungseinheit 22 bestimmt aus den elektrischen Signalen die Partikelgrößenverteilung $c_n$ in Abhängigkeit von den Partikeldurchmessern $d_p$ der Aerosol-Partikel 11. Die räumliche Überlappung des Lichtstrahls 18, des gemessenen Streulichts 19 und des erfassten Teils der Aerosol-Partikel 11 im Durchflussrohr 15 definiert eine virtuelle räumliche Messzelle 23, in der die Partikelgrößenverteilung $c_n$ bestimmt wird. Die Strömung des Aerosols 10 und damit auch der Aerosol-Partikel 11 im Bereich der Messzelle 23 ist laminar und gleichmäßig.

Bei der Messung ist die Lichtintensität des Streulichts 19 und damit auch die hierdurch bedingte elektrische Signalstärke ein Maß für die Partikelgröße der Aerosol-Partikel 11, der dementsprechend ein Partikeldurchmesser $d_p$ zugeordnet wird. Dadurch werden die Partikelgrößen der Aerosol-Partikel 11 bestimmt.

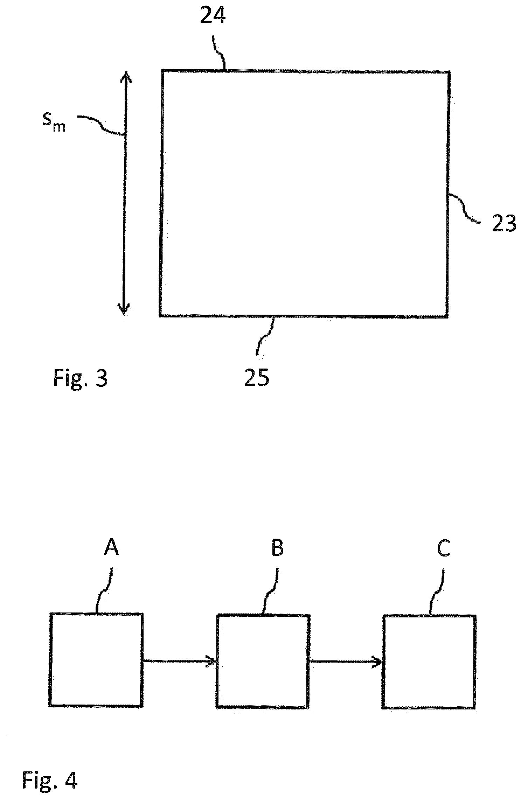

Fig. 3 zeigt die Messzelle 23 in einer quaderförmigen Ausgestaltung in einem Schnitt mit rechteckiger Grundform. Die Aerosol-Partikel 11 treten einzeln an einem oberen Bereich 24 in die Messzelle 23 ein und an einem unteren Bereich 25 aus dieser aus. Die Bewegung der Aerosol-Partikel 11 entspricht wie gesagt einer laminaren, gleichmäßigen Strömung, so dass im Wesentlichen keine Beschleunigung und keine Abbremsung der Aerosol-Partikel 11 innerhalb der Messzelle 23 erfolgen. Die Geschwindigkeit $v_p$ der Aerosol-Partikel 11 für die Dauer der Bewegung durch die Messzelle 23 ist daher konstant.

Fig. 4 stellt ein erfindungsgemäßes Verfahren in einem Ablaufdiagramm dar: Zur Bestimmung der Partikelgeschwindigkeit $v_p$ des Aerosols 11 erfolgt eine zeitabhängige Erfassung A der Streulichtsignale 19 der Aerosol-Partikel 11. Die zeitliche Dauer der Streulichtsignale 19 wird im Sinne der Erfindung als Signaldauer $t_s$ bezeichnet. In einem nächsten Schritt des Verfahrens erfolgt die Berechnung B der Partikelgeschwindigkeit $v_p$ aus der Signaldauer $t_s$ der Aerosol-Partikel 13 wie folgt:

$$v_p = s_m / t_s ,$$

wobei $s_m$ die durch die Messzelle 23 zurückgelegte Strecke zwischen dem oberen Bereich 24 und dem unteren Bereich 25 und durch die geometrische Auslegung der Messzelle 23 bekannt ist. Der Wert von $s_m$ ist in der Verarbeitungseinheit 22 gespeichert. Jede Messung zur Bestimmung der Signaldauer $t_s$ erfolgt jeweils an einem einzelnen Aerosol-Partikel 11.

Der Wert der Partikelgeschwindigkeit $v_p$ wird durch eine nicht dargestellte Anzeigeeinrichtung des Aerosol-Messgerätes 12 ausgegeben C. Die Partikelgeschwindigkeit $v_p$ entspricht näherungsweise aufgrund der laminaren, gleichmäßigen Strömung des Aerosols 10 in der Messzelle 23 dessen Fließgeschwindigkeit $v_a$, die durch die Anzeigeeinrichtung ausgegeben wird.

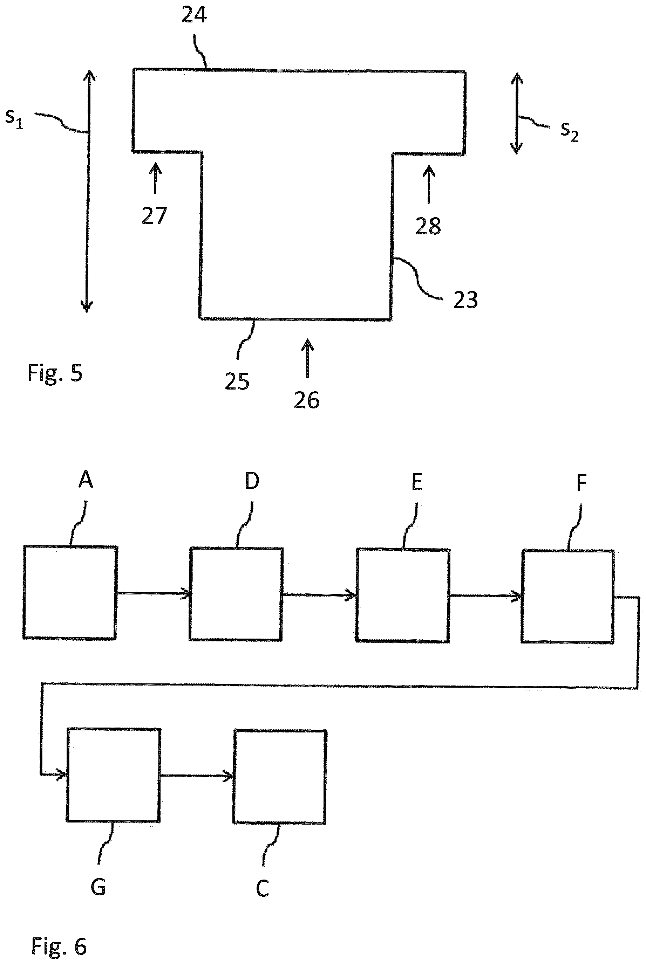

Fig. 5 zeigt eine weitere Ausgestaltung der Messzelle 23, deren Schnitt eine T-förmige Grundfläche aufweist. Die Messzelle 23 weist einen ersten, zentrierten und in vertikaler Richtung längeren Bereich 25 auf, wobei links von dem ersten Bereich 25 ein zweiter, vertikal verkürzter Bereich 26 und rechts von dem ersten Bereich 25 ein dritter, vertikal verkürzter Bereich 27 angeordnet sind. Die Strecke $s_1$ entspricht einer Bewegung der Aerosol-Partikel 11 durch den ersten Bereich 25, die Strecke $s_2$ der Strömungsbewegung der Aerosol-Partikel 11 durch den zweiten Bereich 26 bzw. durch den dritten Bereich 27.

Fig. 6 zeigt eine weitere Ausgestaltung des erfindungsgemäßen Verfahrens zur Bestimmung der Partikelgeschwindigkeit $v_p$, das mit dem vorstehend beschriebenen Schritt A, der Erfassung der Signaldauern $t_s$, beginnt. Zur präziseren Bestimmung der Partikelgeschwindigkeit $v_p$ erfolgt anschließend nun eine Korrektur der Signaldauer $t_s$: Hierzu wird nach der Bestimmung der Signaldauer $t_s$ in einem nächsten Verfahrensschritt C mit der Messung fortgefahren und insgesamt 500 Messungen durchgeführt, deren Signaldauern $t_s$ gespeichert werden. Jede Messung erfolgt auch hier an jeweils einem einzelnen Aerosol-Partikel 11.

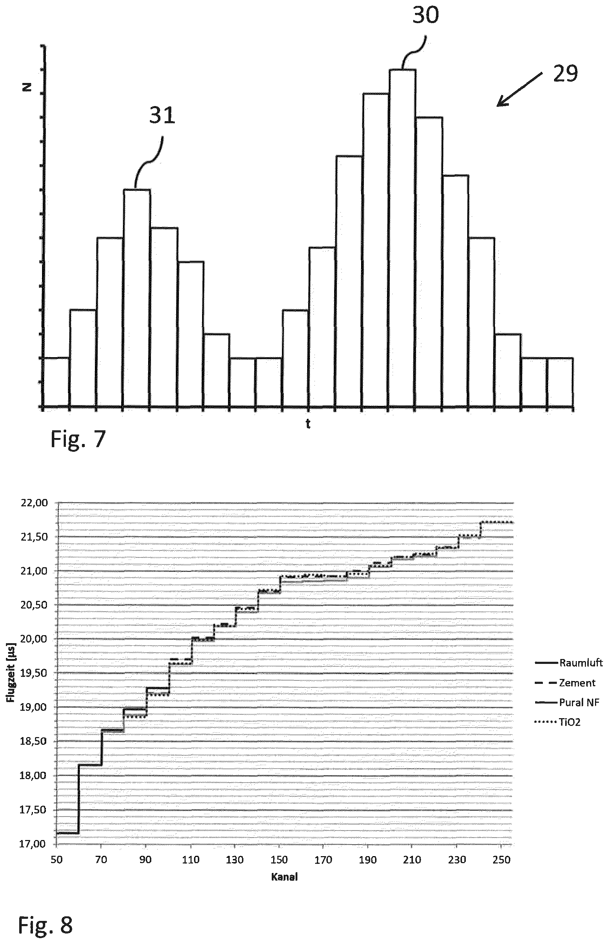

In einem nächsten Verfahrensschritt wird eine Häufigkeitsverteilung der Signaldauern erstellt E: Die Signaldauern $t_s$ werden gegen ihre jeweilige Häufigkeit in einem Histogramm 29 aufgetragen, das beispielhaft in Fig. 7 gezeigt ist. Aufgrund signaltechnischer Gegebenheiten werden im gezeigten Ausführungsbeispiel die Signaldauern $t_s$ zu Messkanälen in Intervallen von jeweils 0,54 us zusammengefasst. Daraus ergibt sich das Histogramm 29 im Sinne eines Balkendiagramms mit zwei lokalen Maxima 30, 31. Das rechte Maximum 30 entspricht dabei einer Bewegung der Aerosol-Partikel 11 durch den ersten Bereich 26 der Messzelle 23, das linke Maximum 31 einer Bewegung der Aerosol-Partikel 11 durch deren zweiten Bereich 27 oder deren dritten Bereich 28.

In einem weiteren Verfahrensschritt erfolgt eine partikelgrößenabhängige Korrektur F der bestimmten Signaldauern $t_s$. In Versuchen hat sich gezeigt, dass für verschiedene Partikeldurchmesser $d_p$ unterschiedliche Signaldauern $t_s$ gemessen werden, was der Tatsache widerspricht, dass sich in einer laminaren und gleichmäßigen Strömung des Aerosols 10 sämtliche Aerosol-Partikel 11 mit der gleichen Partikelgeschwindigkeit $v_p$ bewegen. Durch die folgende Korrektur F wird dem Einfluss der Partikelgröße auf die bestimmten Signaldauern $t_s$ Rechnung getragen.

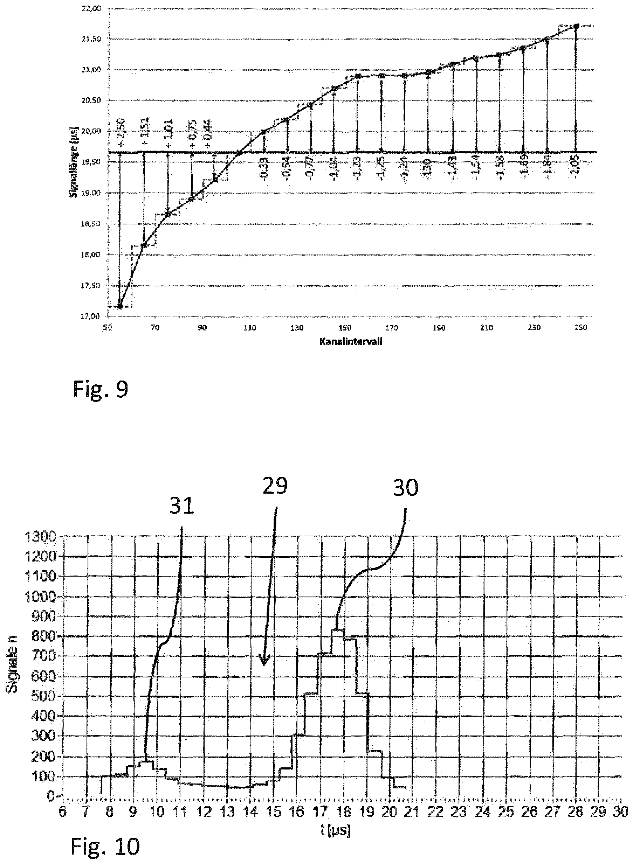

Zur Kompensation dieses Einflusses werden zunächst für verschiedene Partikelgrößen von Aerosol-Partikeln 11 die zugeordneten Signaldauern $t_s$ nach dem vorstehend erläuterten Verfahren bestimmt, wobei aufgrund signaltechnischer Bedingungen Intervalle von Partikelgrößen zu Kanälen zusammengefasst sind, ähnlich wie bei der Erstellung des Histogramms 29 gemäß Fig. 7. Jedem Kanal wird ein Mittelwert für die bestimmte Signaldauer $t_s$ zugeordnet. Fig. 8 zeigt das Verhalten der Signaldauern in Abhängigkeit von der Partikelgröße für Raumluft (schwarze Linie), Zement (gestrichelte Linie), einem Normstaub (graue Linie) und Titandioxid ($ToO_2$, gepunktete Linie), wobei im Folgenden der Verlauf für den Normstaub betrachtet wird, s. Fig. 9.

Die Signaldauer $t_s$ eines Kanals wird als Referenzwert bestimmt; im gezeigten Ausführungsbeispiel der Fig. 9 ist Kanal 110 als Referenzkanal ausgewählt, der entsprechende Referenzwert der Signaldauer $t_s$ beträgt in etwa 19,65 us und ist in Fig. 9 als horizontale Linie dargestellt. Für die übrigen Kanäle werden die Differenzwerte $\Delta t$ zwischen den Signaldauern $t_s$ und dem Referenzwert bestimmt. Die Differenzwerte $\Delta t$ sind in Fig. 9 wiedergegeben und werden den entsprechenden Kanälen der Partikelgrößen zugeordnet. Der einer Partikelgröße zugeordnete Differenzwert $\Delta t$ entspricht damit im Sinne eines Korrekturwertes für die partikelabhängige Korrektur der Signaldauer $t_s$. Durch eine Interpolation kann eine genauere Bestimmung der Differenzwerte $\Delta t$ erfolgen. Zur partikelgrößenabhängigen Korrektur der bestimmten Signaldauern $t_s$ werden diese mit dem der Partikelgröße zugeordneten Korrekturwert $\Delta t$ verrechnet.

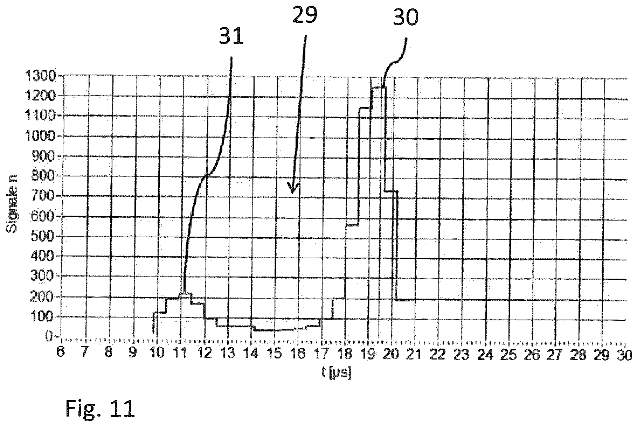

Fig. 10 zeigt in einem Histogramm 29 eine weitere Häufigkeitsverteilung von bestimmten Signaldauern $t_s$, wobei noch keine partikelgrößenabhängige Korrektur erfolgt ist. Fig. 11 zeigt das Histogramm 29 der Fig. 10 nach erfolgter Korrektur. Ein Vergleich zwischen dem unkorrigierten Histogramm der Fig. 9 und dem korrigierten Histogramm der Fig. 11 verdeutlicht, dass die Maxima 30, 31 im korrigierten Histogramm der Fig. 11 größer und schmaler ausgebildet sind als in Fig. 9. Die partikelgrößenabhängige Korrektur der bestimmten Signaldauern $t_s$ erlaubt damit eine genauere Bestimmung der Maxima 30, 31 und damit eine genauere Bestimmung der Partikelgeschwindigkeit $v_p$.

Um die Güte der Messung und der partikelgrößenabhängigen Korrektur zu ermitteln, wird die dem rechten Maximum 30 zugeordnete volle Halbwertsbreite (FWHM) berechnet, die einem statistischen Varianzparameter entspricht. Im Vergleich mit dem unkorrigierten Histogramm der Fig. 9 weist das korrigierte Histogramm der Fig. 10 insbesondere für das rechte Maximum 30 eine geringere volle Halbwertsbreite auf.

In einem weiteren Schritt des Verfahrens gemäß Fig. 6 erfolgt eine Korrektur G der Signaldauern $t_s$ durch eine Konstante $t_0$, die insbesondere unabhängig von der Partikelgröße und der Partikelgeschwindigkeit $v_p$ ist und insofern einem Einfluss 0. Ordnung entspricht. Für die bestimmte Signaldauer $t_s$ gilt:

$$t_s = t_w + t_0,$$

wobei $t_w$ der tatsächlichen Signaldauer entspricht. Indem mit einem nicht gezeigten Durchfluss-Messgerät die Partikelgeschwindigkeit $v_p$ eines Aerosols 10 bestimmt wird, kann die Konstante $t_0$ wie folgt bestimmt werden:

$$t_0 = s/v_p - t_w$$

Der Wert der Konstanten $t_0$ wird im Aerosol-Messgerät 12 gespeichert und das Durchfluss-Messgerät wird für die folgenden Messungen nicht mehr benötigt.

Nach der Durchführung der vorstehend genannten Korrekturen wird die Partikelgeschwindigkeit $v_p$ im letzten Schritt C wie bereits beschrieben über die Anzeigeeinrichtung ausgegeben. Aufgrund des Strömungsverhaltens des Aerosols 10 entspricht dessen Fließgeschwindigkeit $v_a$ der Partikelgeschwindigkeit $v_p$.

Die ermittelte Partikelgeschwindigkeit $v_p$ des Aerosols 10 wird an die Pumpeinrichtung 32 des Aerosol-Messgerätes 12 übertragen, die die Partikelgeschwindigkeit $v_p$ des Aerosols auf einen benutzerdefinierten Wert regelt.

Das erfindungsgemäße Verfahren wird durchgeführt, indem ein entsprechendes Computerprogramm auf der Verarbeitungseinheit 22 des Aerosol-Messgeräts 12 ausgeführt wird.

## Patentansprüche

1. Verfahren zum Bestimmen der Partikelgeschwindigkeit ($v_p$) eines Aerosols (10) mittels eines Aerosol-Messgeräts (12), wobei Aerosol-Partikel (11) des durch eine Messzelle (23) strömenden Aerosols (10) in der Messzelle (23) mit einem elektromagnetischen Strahl (18) beleuchtet, Streulicht (19) von einem Sensor (21) aufgenommen und Streulichtsignale (19) der Aerosol-Partikel (11) erfasst werden, wobei die zeitlichen Signaldauern ($t_s$) der Streulichtsignale (19) der Aerosol-Partikel (11) bestimmt werden und in Abhängigkeit von den Signaldauern ($t_s$) die Partikelgeschwindigkeit ($v_p$) des Aerosols (10) bestimmt wird, wobei

    die Signaldauern ($t_s$) der Streulichtsignale (19) korrigiert werden,
    **dadurch gekennzeichnet, dass**
    die Korrektur der Signaldauern ($t_s$) anhand einer Häufigkeitsverteilung der Signaldauern ($t_s$) erfolgt.

2. Verfahren nach Anspruch 1, **dadurch gekennzeichnet, dass** zur Korrektur der Signaldauern ($t_s$) mindestens 10, insbesondere mindestens 500 Messungen der Streulichtsignale (19) erfolgen und/oder dass mindestens eine der Messungen an jeweils einem einzelnen Aerosol-Partikel (11) erfolgt.

3. Verfahren nach Anspruch 2, **dadurch gekennzeichnet, dass** die Korrektur der Signaldauern ($t_s$) anhand einer Interpolation, insbesondere anhand einer Interpolation der Häufigkeitsverteilung, erfolgt.

4. Verfahren nach Anspruch 3, **dadurch gekennzeichnet, dass** zur Korrektur der Signaldauern ($t_s$) eine Bestimmung mindestens eines insbesondere lokalen Maximums (30, 31) der Häufigkeitsverteilung erfolgt.

5. Verfahren nach einem der Ansprüche 1 bis 4, **dadurch gekennzeichnet, dass** die Partikelgrößen des Aerosols (10) durch das Aerosol-Messgerät (12) bestimmt werden und die Korrektur der Signaldauern ($t_s$) in Abhängigkeit von den Partikelgrößen des Aerosols (10) erfolgt, wobei insbesondere zur partikelgrößenabhängigen Korrektur der Signaldauern ($t_s$) jeder Partikelgröße des Aerosols (10) ein Korrekturwert ($\Delta t$) zugeordnet wird.

6. Verfahren nach einem der Ansprüche 1 bis 5, **dadurch gekennzeichnet, dass** anhand der Häufigkeitsverteilung ein Varianzparameter bestimmt wird, der insbesondere dem mindestens einem lokalen Maximum (30, 31) der Häufigkeitsverteilung zugeordnet ist.

7. Verfahren nach einem der Ansprüche 1 bis 6, **dadurch gekennzeichnet, dass** die Korrektur der Signaldauern ($t_s$) in Abhängigkeit von der Geometrie der Messzelle (23) erfolgt.

8. Verfahren nach einem der Ansprüche 1 bis 7, **dadurch gekennzeichnet, dass** die Korrektur der Signaldauern ($t_s$) eine Konstante ($t_0$) umfasst, die insbesondere unabhängig von der Partikelgröße des Aerosols (10) ist, wobei insbesondere zur Bestimmung der Konstante (to) mindestens zwei bestimmte Signaldauern ($t_s$) verwendet werden, die jeweils einem lokalen Maximum (30, 31) der Häufigkeitsverteilung zugeordnet sind, wobei insbesondere zur Bestimmung der Konstante (to) die Abhängigkeit zwischen der Signaldauer ($t_s$) und der Partikelgeschwindigkeit ($v_p$), insbesondere mittels einer Messung mit einem Durchfluss-Messgerät bestimmt wird.

9. Verfahren nach einem der Ansprüche 1 bis 8, **dadurch gekennzeichnet, dass** aus der bestimmten Partikelgeschwindigkeit ($v_p$) die Fließgeschwindigkeit ($v_a$) des Aerosols (10) bestimmt wird.

10. Verfahren nach einem der Ansprüche 1 bis 9, **dadurch gekennzeichnet, dass** das Aerosol (10) als laminare Strömung und/oder gleichmäßig durch die Messzelle (23) strömt.

11. Aerosol-Messgerät (12) zur Bestimmung der Partikelgeschwindigkeit ($v_p$) eines Aerosols (10), wobei Aerosol-Partikel (11) in einer Messzelle (23) derart angeordnet sind, dass die Aerosol-Partikel (11) von einem elektromagnetischen Strahl (18) beleuchtbar sind, wobei Streulicht (19) der Aerosol-Partikel (11) von einem Sensor (21) aufnehmbar und Streulichtsignale (19) der Aerosol-Partikel (11) erfassbar sind, wobei eine Verarbeitungseinheit (22) derart ausgestaltet ist, dass die zeitlichen Signaldauern ($t_s$) der Streulichtsignale (19) der Aerosol-Partikel (11) bestimmbar sind und in Abhängigkeit von den Signaldauern ($t_s$) die Partikelgeschwindigkeit ($v_p$) des Aerosols (10) bestimmbar ist, wobei die Verarbeitungseinheit (22) derart ausgestaltet ist, die Schritte eines Verfahrens nach einem der Ansprüche 1 bis 10 durchzuführen.

12. Aerosol-Messgerät nach Anspruch 11, wobei der elektromagnetische Strahl (18) als vorzugsweise polychromatischer Lichtstrahl ausgebildet ist.

13. Aerosol-Messgerät nach einem der Ansprüche 11 oder 12, wobei die Verarbeitungseinheit (22) mit einer Strömungseinrichtung (32) verbunden ist, die insbesondere zur Regelung der Partikelgeschwindigkeit ($v_p$) des Aerosols (10) auf einen benutzerdefinierten Wert ausgestaltet ist.

14. Aerosol-Messgerät nach einem der Ansprüche 11 bis 13, wobei ein Schnitt der Messzelle (23) eine mehreckige, insbesondere eine viereckige oder eine T-förmige Grundform aufweist.

15. Computerprogramm mit Programmcodemitteln, das dazu ausgestaltet ist, die Schritte eines Verfahren nach einem der Ansprüche 1 bis 10 auszuführen, wenn das Computerprogramm ausgeführt wird auf einer Verarbeitungseinheit (22) eines Aerosol-Messgeräts (12) nach einem der Ansprüche 11 bis 14.

**Claims**

1. Method for determining the particle velocity ($v_p$) of an aerosol (10) by means of an aerosol measuring device (12), wherein aerosol particles (11) of the aerosol (10) flowing through a measuring cell (23) are illuminated with an electromagnetic beam (18) in the measuring cell (23), scattered light (19) is registered by a sensor (21), and scattered light signals (19) of the aerosol particles (11) are detected, wherein the temporal signal durations ($t_s$) of the scattered light signals (19) of the aerosol particles (11) are determined, and the particle velocity ($v_p$) of the aerosol (10) is determined on the basis of the signal durations ($t_s$), wherein the signal durations ($t_s$) of the scattered light signals (19) are corrected **characterized in that** the signal durations ($t_s$) are corrected by means of a frequency distribution of the signal durations ($t_s$).

2. Method according to claim 1, **characterized in that** at least 10, in particular at least 500, measurements of the scattered light signals (19) are carried out to correct the signal durations ($t_s$) and/or that at least one of the measurements is carried out on one individual aerosol particle (11).

3. Method according to claim 2, **characterized in that** the signal durations ($t_s$) are corrected by means of an interpolation, in particular by means of an interpolation of the frequency distribution.

4. Method according to claim 3, **characterized in that** at least one, in particular local, maximum (30, 31) of the frequency distribution is determined in order to correct the signal durations ($t_s$).

5. Method according to any of claims 1 to 4, **characterized in that** the particle sizes of the aerosol (10) are determined by the aerosol measuring device (12), and the signal durations ($t_s$) are corrected on the basis of the particle sizes of the aerosol (10), wherein a correction value ($\Delta t$) is assigned to each particle size of the aerosol (10), in particular for the particle size-dependent correction of the signal durations ($t_s$).

6. Method according to any of claims 1 to 5, **characterized in that** a variance parameter assigned in particular to the at least one local maximum (30, 31) of the frequency distribution is determined on the basis of the frequency distribution.

7. Method according to any of claims 1 to 6, **characterized in that** the signal durations ($t_s$) are corrected on the basis of the geometry of the measuring cell (23).

8. Method according to any of claims 1 to 7, **characterized in that** the correction of the signal durations ($t_s$) comprises a constant ($t_0$) which is in particular independent of the particle size of the aerosol (10), wherein, in particular for determining the constant ($t_0$), at least two determined signal durations ($t_s$) are used, which are each assigned to a local maximum (30, 31) of the frequency distribution, wherein in particular for determining the constant ($t_0$), the dependency between the signal duration ($t_s$) and the particle velocity ($v_p$) is determined, in particular by means of a measurement using a flow meter.

9. Method according to any of claims 1 to 8, **characterized in that** the flow speed ($v_a$) of the aerosol (10) is determined from the determined particle speed ($v_p$).

10. Method according to any of claims 1 to 9, **characterized in that** the aerosol (10) flows as a laminar flow and/or uniformly through the measuring cell (23).

**11.** Aerosol measuring device (12) for determining the particle velocity ($v_p$) of an aerosol (10), wherein aerosol particles (11) are arranged in a measuring cell (23) such that the aerosol particles (11) can be illuminated by an electromagnetic beam (18), wherein scattered light (19) from the aerosol particles (11) can be registered by a sensor (21), and scattered light signals (19) from the aerosol particles (11) can be detected, wherein a processing unit (22) is configured such that the temporal signal durations ($t_s$) of the scattered light signals (19) of the aerosol particles (11) can be determined, and the particle velocity ($v_p$) of the aerosol (10) can be determined on the basis of the signal durations ($t_s$), wherein the processing unit (22) is configured such that it carries out the steps of a method according to any of claims 1 to 10.

**12.** Aerosol measuring device according to claim 11, wherein the electromagnetic beam (18) is formed as a preferably polychromatic light beam.

**13.** Aerosol measuring device according to any of claims 11 or 12, wherein the processing unit (22) is connected to a flow device (32) which is configured in particular to control the particle velocity ($v_p$) of the aerosol (10) at a user-defined value.

**14.** Aerosol measuring device according to any of claims 11 to 13, wherein a section of the measuring cell (23) has a polygonal, in particular a quadriliteral or a T-shaped basic shape.

**15.** Computer program having program code means, which computer program is configured to carry out the steps of a method according to any of claims 1 to 10 when the computer program is run on a a processing unit (22) of an aerosol measuring device (12) according to any of claims 11 to 14.

**Revendications**

**1.** Procédé permettant de déterminer la vitesse de particules ($v_p$) d'un aérosol (10) à l'aide d'un appareil de mesure d'aérosol (12), dans lequel des particules d'aérosol (11) de l'aérosol (10) s'écoulant à travers une cellule de mesure (23) sont illuminées dans la cellule de mesure (23) par un faisceau électromagnétique (18), de la lumière diffusée (19) est reçue par un capteur (21) et des signaux de lumière diffusée (19) des particules d'aérosol (11) sont détectés, dans lequel les durées de signal ($t_s$) dans le temps des signaux de lumière diffusée (19) des particules d'aérosol (11) sont déterminées et la vitesse de particules ($v_p$) de l'aérosol (10) est déterminée en fonction des durées de signal ($t_s$), dans lequel les durées de signal ($t_s$) des signaux de lumière diffusée (19) sont corrigées, **caractérisé en ce que** la correction des durées de signal ($t_s$) est effectuée au moyen d'une distribution de fréquence des durées de signal ($t_s$).

**2.** Procédé selon la revendication 1, **caractérisé en ce que,** pour la correction des durées de signal ($t_s$), au moins 10, en particulier au moins 500 mesures des signaux de lumière diffusée (19) sont effectuées, et/ou **en ce qu'**au moins l'une des mesures est effectuée sur respectivement une particule d'aérosol (11) individuelle.

**3.** Procédé selon la revendication 2, **caractérisé en ce que** la correction des durées de signal ($t_s$) est effectuée au moyen d'une interpolation, en particulier au moyen d'une interpolation de la distribution de fréquence.

**4.** Procédé selon la revendication 3, **caractérisé en ce que,** pour la correction des durées de signal ($t_s$), une détermination d'au moins un maximum (30, 31), en particulier local, de la distribution de fréquence est effectuée.

**5.** Procédé selon l'une des revendications 1 à 4, **caractérisé en ce que** les tailles de particules de l'aérosol (10) sont déterminées par l'appareil de mesure d'aérosol (12), et la correction des durées de signal ($t_s$) est effectuée en fonction des tailles de particules de l'aérosol (10), dans lequel une valeur de correction ($\Delta t$) est associée à chaque taille de particules de l'aérosol (10), en particulier pour la correction des durées de signal ($t_s$) en fonction des tailles de particules.

**6.** Procédé selon l'une des revendications 1 à 5, **caractérisé en ce qu'**un paramètre de variance est déterminé au moyen de la distribution de fréquence, lequel paramètre de variance est en particulier associé à l'au moins un maximum (30, 31) local de la distribution de fréquence.

**7.** Procédé selon l'une des revendications 1 à 6, **caractérisé en ce que** la correction des durées de signal ($t_s$) est effectuée en fonction de la géométrie de la cellule de mesure (23).

**8.** Procédé selon l'une des revendications 1 à 7, **caractérisé en ce que** la correction des durées de signal ($t_s$) comprend une constante ($t_0$) qui est en particulier indépendante de la taille des particules de l'aérosol (10), dans lequel au moins deux durées de signal ($t_s$) déterminées sont utilisées en particulier pour la détermination de la constante ($t_0$), lesquelles durées de signal sont respectivement associées à un maximum (30, 31) local de la distribution de fréquence, dans lequel, en particulier pour la détermination de la constante $(t_0)$, la dépendance entre la durée de signal $(t_s)$ et la vitesse de particules $(v_p)$ est déterminée, en particulier à l'aide d'une mesure avec un appareil de mesure de débit.

9. Procédé selon l'une des revendications 1 à 8, **caractérisé en ce que** la vitesse d'écoulement $(v_a)$ de l'aérosol (10) est déterminée à partir de la vitesse de particules $(v_p)$ déterminée.

10. Procédé selon l'une des revendications 1 à 9, **caractérisé en ce que** l'aérosol (10) s'écoule sous forme d'écoulement laminaire et/ou de manière uniforme à travers la cellule de mesure (23).

11. Appareil de mesure d'aérosol (12) destiné à la détermination de la vitesse de particules $(v_p)$ d'un aérosol (10), dans lequel des particules d'aérosol (11) sont agencées dans une cellule de mesure (23) de telle sorte que les particules d'aérosol (11) peuvent être illuminées par un faisceau électromagnétique (18), dans lequel de la lumière diffusée (19) des particules d'aérosol (11) peut être reçue par un capteur (21) et des signaux de lumière diffusée (19) des particules d'aérosol (11) peuvent être détectés, dans lequel une unité de traitement (22) est configurée de telle sorte que les durées de signal $(t_s)$ dans le temps des signaux de lumière diffusée (19) des particules d'aérosol (11) peuvent être déterminées et la vitesse de particules $(v_p)$ de l'aérosol (10) peut être déterminée en fonction des durées de signal $(t_s)$, dans lequel
l'unité de traitement (22) est configurée pour mettre en oeuvre les étapes d'un procédé selon l'une des revendications 1 à 10.

12. Appareil de mesure d'aérosol selon la revendication 11, dans lequel le faisceau électromagnétique (18) est conçu comme un faisceau lumineux, de préférence polychromatique.

13. Appareil de mesure d'aérosol selon l'une des revendications 11 ou 12, dans lequel l'unité de traitement (22) est reliée à un dispositif d'écoulement (32) configuré en particulier pour la régulation de la vitesse de particules $(v_p)$ de l'aérosol (10) à une valeur définie par l'utilisateur.

14. Appareil de mesure d'aérosol selon l'une des revendications 11 à 13, dans lequel une section de la cellule de mesure (23) présente une forme de base polygonale, en particulier carrée ou en T.

15. Programme informatique comportant des moyens de code de programme configurés pour exécuter les étapes d'un procédé selon l'une des revendications 1 à 10 lorsque le programme informatique est exécuté sur une unité de traitement (22) d'un appareil de mesure d'aérosol (12) selon l'une des revendications 11 à 14.

Fig. 1

Fig. 2

Fig. 3

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3081920 A2